# EUROPÄISCHE PATENTANMELDUNG

(11) **EP 4 461 283 A1**
(43) Veröffentlichungstag der Anmeldung: **13.11.2024**
(21) Anmeldenummer: 24164949.0
(22) Anmeldetag: 20.03.2024
(51) Int. Cl.: A61G 12/00

(54) **DECKENBEFESTIGUNGSVORRICHTUNG FÜR MEDIZINGERÄTE**

(30) Priorität: 09.05.2023 DE 202023102516 U
(71) Anmelder: Amtrion GmbH, 32457 Porta Westfalica (DE)
(72) Erfinder: Rosner, Matthias, 32549 Bad Oeynhausen (DE)
(74) Vertreter: Wickord, Wiro

(57) **Zusammenfassung**

Die Erfindung betrifft eine Deckenbefestigungsvorrichtung für Medizingeräte umfassend einen an einer Decke (A) festlegbaren Träger (1), ein in einer Montageposition vertikal längserstrecktes und an dem Träger (1) gehaltenes Deckenrohr (2) sowie eine ortsfest zu dem Träger (1) und zu dem Deckenrohr (2) montierte Verkleidung (3) für den Träger (1), wobei die Verkleidung (3) eine Durchführungsöffnung (4) für das Deckenrohr (2) aufweist, welche geringfügig größer dimensioniert ist als eine Außenabmessung des Deckenrohrs (2), und mit einem freien Randabschnitt (5) gegen die Decke (A) anlegbar ist, wobei ein das Deckenrohr (2) umgreifender und an die Verkleidung (3) angelegter Elastomerring (6) vorgesehen ist, wobei der Elastomerring (6) so dimensioniert ist, dass er mantelseitig an dem Deckenrohr (2) anliegt und auf Zug gespannt ist, und wobei der Elastomerring (6) an dem Deckenrohr (2) so positionierbar ist, dass er die Verkleidung (3) in der Montageposition gegen die Decke (A) andrückt.

## Beschreibung

Die Erfindung betrifft eine Deckenbefestigungsvorrichtung für Medizingeräte umfassend einen an einer Decke festlegbaren Träger, ein in einer Montageposition vertikal längserstrecktes und an dem Träger gehaltenes Deckenrohr sowie eine ortsfest zu dem Träger und zu dem Deckenrohr montierte Verkleidung für den Träger, wobei die Verkleidung eine Durchführungsöffnung für das Deckenrohr aufweist, welche geringfügig größer dimensioniert ist als eine Außenabmessung des Deckenrohrs, und mit einem freien Randabschnitt gegen die Decke anlegbar ist.

Ferner betrifft die Erfindung eine Installationsanordnung mit einer deckenmontierten Deckenbefestigungsvorrichtung sowie die Verwendung der Deckenbefestigungsvorrichtung für eine deckenhängende Montage von Medizingeräten.

Gattungsgemäße Deckenbefestigungsvorrichtungen sehen heute üblicherweise vor, die Verkleidung für den Träger mittels einer Befestigungsschraube an dem Träger selbst oder dem Deckenrohr festzulegen. Die Befestigungsschraube für die Verkleidung ist dabei typischerweise durch die Verkleidung hindurchgeschraubt und von außen sichtbar. Die Befestigungsschraube kann als störend empfunden werden. Darüber hinaus bedarf es bei der Montage und Demontage der Verkleidung stets eines geeigneten Werkzeugs.

Aufgabe der vorliegenden Erfindung ist es, eine montagefreundliche und optisch ansprechende Deckenbefestigungsvorrichtung und eine Installationsanordnung hiermit anzugeben.

Zur Lösung der Aufgabe ist die Erfindung in Verbindung mit den Merkmalen des Oberbegriffs des Anspruchs 1 dadurch gekennzeichnet, dass ein das Deckenrohr umgreifender und an die Verkleidung angelegter Elastomerring vorgesehen ist, wobei der Elastomerring so dimensioniert ist, dass er mantelseitig an dem Deckenrohr anliegt und auf Zug gespannt ist, und dass der Elastomerring an dem Deckenrohr so positionierbar ist, dass er die Verkleidung in der Montageposition gegen die Decke andrückt.

Der besondere Vorteil der Erfindung besteht darin, dass die Montage der Verkleidung intuitiv und werkzeugfrei erfolgen kann. Der Elastomerring wird dabei händisch entlang des Deckenrohrs verschoben und so positioniert, dass die Verkleidung den Träger umgreift und mit dem freien Randabschnitt gegen die Decke angelegt ist. Insofern sichert der Elastomerring die Position der Verkleidung relativ zu den anderen Komponenten der Deckenbefestigungsvorrichtung.

In analoger Weise kann die Demontage der Verkleidung werkzeuglos erfolgen. Der Elastomerring wird hierzu entlang des Deckenrohrs verschoben. Anschließend kann dann die Verkleidung entfernt werden. Da der Elastomerring an einer beliebigen Stelle des Deckenrohrs positioniert werden kann und in dieser beliebigen Position die Verkleidung gegen ein weiteres Herabrutschen sichert, vereinfacht sich durch das Vorsehen des Elastomerrings als Sicherung für die Verkleidung auch der Wartungszugriff auf den Träger beziehungsweise deckennahe Abschnitte des Deckenrohrs. Es bedarf insbesondere keiner vollständigen Demontage der Verkleidung, welche heute typischerweise nur nach einer aufwendigen Demontage eines endseitig an dem Deckenrohr gehaltenen Tragarmsystems möglich ist, welches wiederum das Medizingerät trägt.

Durch den Verzicht auf die Verschraubung erlangt die Deckenbefestigungsvorrichtung überdies eine besonders ansprechende Optik und schwer zu reinigende Verbindungsstellen werden vermieden. Überdies kann auf eine Durchbrechung der Verkleidung für die Befestigungsschraube verzichtet werden. Insofern verbessert sich die mechanische Festigkeit der Verkleidung und ein Eindringen von Schmutz und Feuchtigkeit ins Innere der Verkleidung wird vermieden.

Nach einer bevorzugten Ausführungsform der Erfindung weist die Durchführungsöffnung der Verkleidung einen in Richtung des Trägers und/oder des Deckenrohrs abragenden, zumindest abschnittsweise und bevorzugt vollständig umlaufenden Kragen auf. Der Kragen bildet im Zusammenwirken mit einer Außenmantelfläche des Deckenrohrs eine sich in Richtung des Trägers verjüngende Aufnahmenut für den Elastomerring. Vorteilhaft definiert der so gebildete Kragen eine Anlagefläche für den Elastomerring.

Nach einer Weiterbildung der Erfindung bildet die Anlagefläche eine kegelstumpfförmige Schrägfläche, die unter einem spitzen Winkel zu dem Deckenrohr orientiert ist. Die schräge Anlagefläche begünstigt einen sicheren Halt und eine erhöhte Klemmwirkung beim Festlegen der Verkleidung. Überdies begünstigt die schräge Orientierung des Kragens eine Zentrierung der Verkleidung zum Deckenrohr bei der Montage.

Nach einer Weiterbildung der Erfindung ist die Aufnahmenut so dimensioniert, dass sie den Elastomerring bevorzugt vollständig oder zumindest zu einem überwiegenden Teil aufnimmt. Vorteilhaft begünstigt das Einsetzen des Elastomerrings in die Aufnahmenut eine sichere Montage der Verkleidung. Darüber hinaus ergibt sich eine ansprechende Optik der Deckenbefestigungsvorrichtung, wenn der Elastomerring vollständig oder abschnittsweise in der Aufnahmenut verschwindet und von außen nicht oder kaum wahrnehmbar ist.

Nach einer Weiterbildung der Erfindung weist der Elastomerring einen konstanten und bevorzugt runden Querschnitt auf. Insbesondere kann ein handelsüblicher O-Ring, welcher oft als Dichtring verwendet wird, den erfindungsgemäßen Elastomerring bilden. Vorteilhaft lassen sich derartige Gestaltungsformen des Elastomerrings kostengünstig realisieren. Darüber hinaus vereinfacht die runde Querschnittsgeometrie die Montage des Elastomerrings, da dieser aufgrund der geringen Berührfläche mit dem Deckenrohr und der runden Querschnittsgeometrie vergleichsweise einfach entlang der Mantelfläche des Deckenrohrs verschoben oder abgerollt werden kann.

Nach einer Weiterbildung der Erfindung ist die Verkleidung dünnwandig und schalenartig ausgebildet. Vorteilhaft erhält die Verkleidung durch die dünnwandige, schalenartige Konstruktion Membraneigenschaften. Hierdurch ist es möglich, die Verkleidung bei der Montage zu verformen und mit einer gewissen Vorspannung gegen die Decke anzudrücken. Ist dann der Elastomerring in Position und die Verkleidung wird freigegeben, rückverformt sich die Verkleidung und drückt sich gegen den Elastomerring. Sie ist dann mittels des Elastomerrings sicher gehalten und festgelegt.

Nach einer Weiterbildung der Erfindung ist die Verkleidung rotationssymmetrisch ausgebildet. Vorteilhaft vereinfacht sich durch die Rotationssymmetrie die Montage der Verkleidung, da diese in einer beliebigen Position vorgesehen werden kann. Überdies begünstigt die Rotationssymmetrie die mechanische Festigkeit.

Zur Lösung der Aufgabe weist die Erfindung die Merkmale des Anspruchs 11 auf. Demzufolge umfasst eine Installationsanordnung die deckenmontierte Deckenbefestigungsvorrichtung mit dem an der Decke befestigten Träger, dem in der Montageposition vertikal erstreckten und an dem Träger festgelegten Deckenrohr und der ortsfest zu dem Träger und zu dem Deckenrohr montierten Verkleidung für den Träger. Die Verkleidung weist eine Durchführungsöffnung für das Deckenrohr auf. Die Durchführungsöffnung ist geringfügig größer dimensioniert als eine Außenabmessung des Deckenrohrs. Überdies ist die Verkleidung mit einem freien Randabschnitt derselben gegen die Decke angelegt. Des Weiteren ist der das Deckenrohr umgreifende und an die Verkleidung angelegte Elastomerring vorgesehen. Der Elastomerring ist so dimensioniert, dass er mantelseitig an dem Deckenrohr anliegt und auf Zug vorgespannt ist. Dabei ist der Elastomerring an dem vertikal längs erstreckten Deckenrohr so positioniert, dass er die Verkleidung gegen die Decke andrückt.

Die Deckenbefestigungsvorrichtung wird insbesondere für die Decken und die Befestigung von Medizingeräten beispielsweise in Operationssälen, Notaufnahmen oder anderen Behandlungszimmern verwendet. Die Medizingeräte sind dabei typischerweise an einem Tragarmsystem festgelegt, welches seinerseits endseitig an dem Deckenrohr der Deckenbefestigungsvorrichtung verschwenkbar und/oder höhenverstellbar festgelegt ist. Darüber hinaus kann eine Verwendung der Deckenbefestigungsvorrichtung in der Industrie und im Handwerk vorgesehen. Beispielsweise kann ein Diagnoseterminal in einer Kfz-Werkstatt oder ein Bediengerät eines Fertigungsanlage mittels der erfindungsgemäße Deckenbefestigungsvorrichtung aufgehangen werden.

Aus den weiteren Unteransprüchen und der nachfolgenden Beschreibung sind weitere Vorteile, Merkmale und Einzelheiten der Erfindung zu entnehmen. Die dort erwähnten Merkmale können jedenfalls einzeln für sich oder auch in beliebiger Kombination erfindungswesentlich sein. Erfindungsgemäß beschriebene Merkmale und Details der Deckenbefestigungsvorrichtung gelten selbstverständlich auch im Zusammenhang mit der Installationsanordnung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:

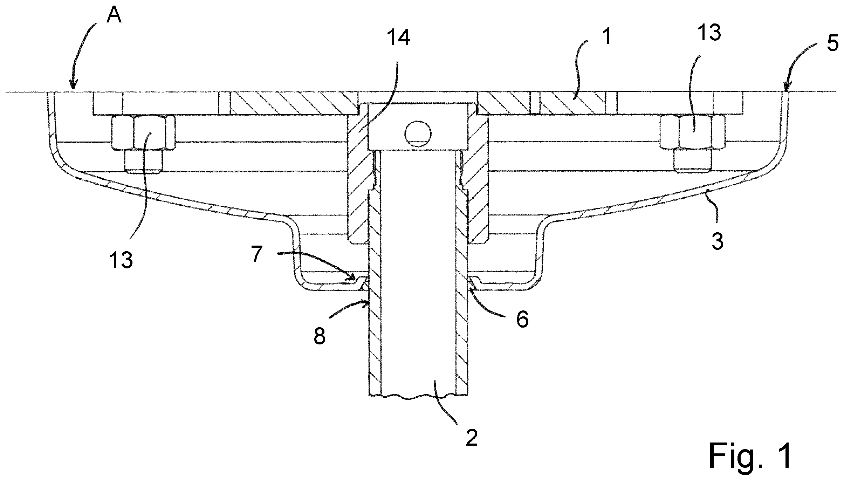

- Fig. 1: eine Schnittdarstellung einer Installationsanordnung mit einer erfindungsgemäßen Deckenbefestigungsvorrichtung,

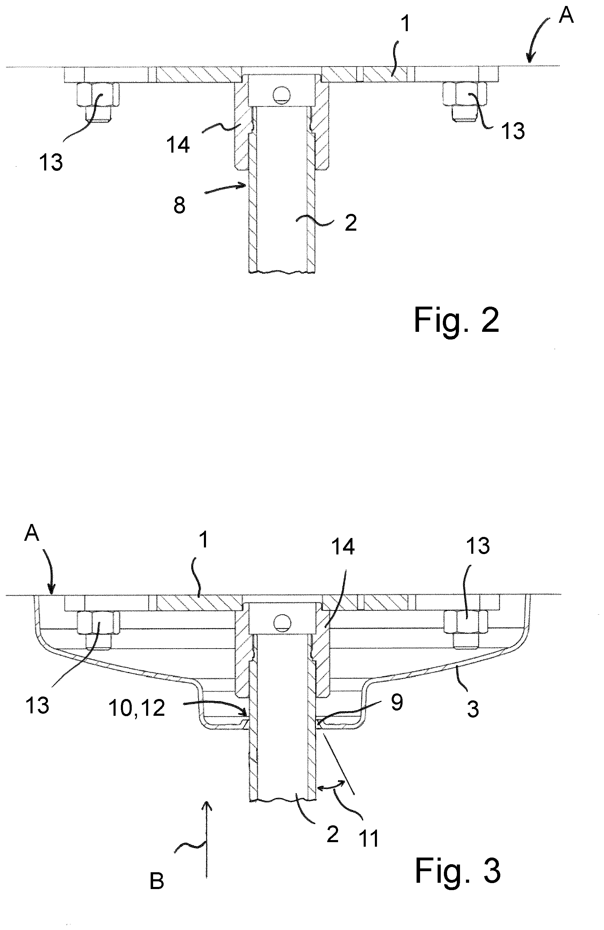

- Fig. 2: eine ersten Montageschritt der Deckenbefestigungsvorrichtung nach Fig. 1,
- Fig. 3: eine zweiten Montageschritt der Deckenbefestigungsvorrichtung nach Fig. 1,

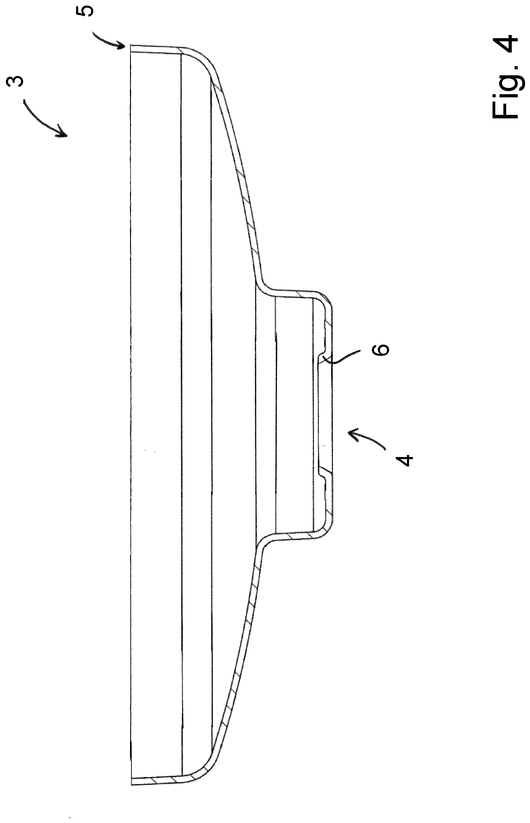

- Fig. 4: eine Schnittdarstellung einer Verkleidung der Deckenbefestigungsvorrichtung nach Fig. 1 und

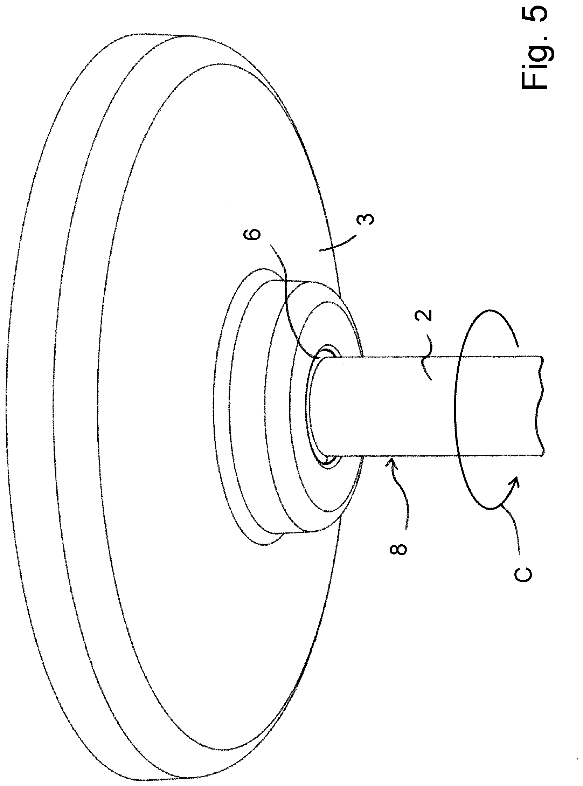

- Fig. 5: eine perspektivische Wiedergabe der Deckenbefestigungsvorrichtung nach Fig. 1.

Eine erfindungsgemäße Deckenbefestigungsvorrichtung sowie eine Installationsanordnung mit dieser Befestigungsvorrichtung dienen der deckenmontierten Befestigung von Medizingeräten beispielsweise in einem Operationssaal, einer Notaufnahme oder einem anderen medizinischen Behandlungsraum.

Die Deckenbefestigungsvorrichtung umfasst einen an einer Decke A montierten Träger 1, einen in einer Montageposition an dem Träger gehaltenes und vertikal längserstrecktes Deckenrohr 2 sowie eine ortsfest zu dem Träger 1 und zu dem Deckenrohr 2 montierte Verkleidung, welche den Träger 1 bevorzugt vollständig und das Deckenrohr 2 abschnittsweise umgreift und verdeckt. Die Verkleidung 3 sieht eine Durchführungsöffnung 4 für das Deckenrohr 2 vor. Die Durchführungsöffnung 4 ist geringfügig größer als eine Außenabmessung des Deckenrohrs 2. Auf einer der Durchführungsöffnung 4 abgewandten Seite sieht die Verkleidung 3 einen freien Randabschnitt 5 vor. Mit dem freien Randabschnitt 5 ist die Verkleidung 3 in die Montageposition gegen die Decke A angelegt.

Die Deckenbefestigungsvorrichtung sieht des Weiteren einen Elastomerring 6 vor, der das Deckenrohr 2 umgreift und gegen die Verkleidung 3 angelegt. Der Elastomerring 6 ist so dimensioniert, dass er mantelseitig an dem Deckenrohr 2 anliegt und in eine Umfangsrichtung C des Deckenrohrs 2 auf Zug vorgespannt ist. Bezogen auf eine vertikale Montageposition am Deckenrohr 2 ist der Elastomerring 6 so positioniert, dass er die Verkleidung 3 gegen die Decke A andrückt.

Die Montage der Deckenbefestigungsvorrichtung erfolgt so, dass zunächst der Träger 1 mittels einer Verschraubung 13 an der Decke A festgelegt wird. Das Deckenrohr 2 wird dann mithilfe einer an den Träger 1 festgelegten Rohraufnahme 14 so montiert, dass es vertikal erstreckt senkrecht von der Decke A abragt. Über ein freies, in den Zeichnungen nicht dargestelltes Ende des Deckenrohrs 2 wird dann die Verkleidung 3 und anschließend der Elastomerring 6 in eine Montagerichtung B von unten auf das Deckenrohr 2 aufgeschoben.

Um eine sichere Festlegung der Verkleidung 3 an der Decke A zu bewirken, umgibt die Durchführungsöffnung 4 der Verkleidung ein bezogen auf die Montageposition nach innen in Richtung des Trägers 1 sowie des Deckenrohrs 2 abragender Kragen 7. Der Kragen 7 bildet vorliegend eine Schrägfläche, welche kegelstumpfförmig ausgebildet ist und zu einer Außenmantelfläche 8 des Deckenrohrs 2 einen spitzen Winkel 11 einnimmt. Im Zusammenwirken mit der Außenmantelfläche 8 des Deckenrohrs 2 bildet der Kragen 7 eine Aufnahmenut 9, in die der Elastomerring 6 in der Montagestellung der Verkleidung 3 eingreift.

Die Aufnahmenut 9 für den Elastomerring 6 ist im vorliegenden Ausführungsbeispiel der Erfindung so dimensioniert, dass der Elastomerring 6 in der Montageposition fast vollständig in die Aufnahmenut 9 eingesetzt ist. Er ist für einen außenstehenden Betrachter somit kaum sichtbar beziehungsweise wahrnehmbar. Zugleich dichtet der Elastomerring einen Ringspalt 10, der an einem Grund 12 der Aufnahmenuten 9 zwischen dem Deckenrohr 2 und dem Kragen 7 der Verkleidung 3 in die Umfangsrichtung C umlaufend gebildet ist, ab. Der Ringspalt 10 ist funktionsnotwendigerweise kleiner als eine in der Montageposition horizontal bestimmte Querschnittsbreite des Elastomerrings 6. Bevorzugt ist eine mittlere Breite des Ringspalts 10 kleiner als 5 mm. Besonders bevorzugt ist eine mittlere Breite von 2 mm oder weniger.

Als Elastomerring kann beispielsweise ein O-Ring eingesetzt werden, der vielfach als Dichtring verwendet wird. Derartige Elastomerringe 6 sind kostengünstig in der Herstellung und langlebig.

Die Verkleidung 3 ist dünnwandig und schalenartig ausgebildet. Die dünnwandige, schalenartige Gestaltung der Verkleidung 3 verleiht dieser Elastizität und eine membranartige Funktion. Beispielsweise kann die Verkleidung 2 aus einem Kunststoff oder einem metallischen Werkstoff hergestellt sein.

Die elastisch verformbare Verkleidung 3 kann beim Andrücken ebendieser gegen die Decke A geringfügig verformt werden. Wird nun der Elastomerring 6 entlang des Deckenrohrs 2 in Richtung der Verkleidung 3 verschoben und in die Aufnahmenut 9 eingesetzt, ist die Verkleidung 3 mit einer gewissen Vorspannung gegen die Decke A angedrückt und sicher montiert. Die Schrägfläche, die durch den Kragen 7 der Verkleidung 3 gebildet ist, sorgt dabei für einen sicheren Halt der Verkleidung 3 und zugleich für eine zumindest grobe Zentrierung der Verkleidung 3 relativ zu dem Deckenrohr 2.

Gleiche Bauteile und Bauteilfunktionen sind durch gleiche Bezugszeichen gekennzeichnet.

## Patentansprüche

1. Deckenbefestigungsvorrichtung für Medizingeräte umfassend einen an einer Decke (A) festlegbaren Träger (1), ein in einer Montageposition vertikal längserstrecktes und an dem Träger (1) gehaltenes Deckenrohr (2) sowie eine ortsfest zu dem Träger (1) und zu dem Deckenrohr (2) montierte Verkleidung (3) für den Träger (1), wobei die Verkleidung (3) eine Durchführungsöffnung (4) für das Deckenrohr (2) aufweist, welche geringfügig größer dimensioniert ist als eine Außenabmessung des Deckenrohrs (2), und mit einem freien Randabschnitt (5) gegen die Decke (A) anlegbar ist, **dadurch gekennzeichnet, dass** ein das Deckenrohr (2) umgreifender und an die Verkleidung (3) angelegter Elastomerring (6) vorgesehen ist, wobei der Elastomerring (6) so dimensioniert ist, dass er mantelseitig an dem Deckenrohr (2) anliegt und auf Zug gespannt ist, und dass der Elastomerring (6) an dem Deckenrohr (2) so positionierbar ist, dass er die Verkleidung (3) in der Montageposition gegen die Decke (A) andrückt.

2. Deckenbefestigungsvorrichtung nach Anspruch 1, **dadurch gekennzeichnet, dass** die Durchführungsöffnung (4) der Verkleidung (3) einen in Richtung des Trägers (1) orientierten, zumindest abschnittsweise umlaufenden Kragen (7) aufweist, wobei durch den Kragen (7) im Zusammenwirken mit einer Außenmantelfläche (8) des Deckenrohrs (2) eine sich in Richtung des Trägers (1) verjüngende Aufnahmenut (9) gebildet ist, in die der Elastomerring (6) eingreift.

3. Deckenbefestigungsvorrichtung nach Anspruch 2, **dadurch gekennzeichnet, dass** der Kragen (7) eine zumindest abschnittsweise kegelförmige Schrägfläche bildet, an die der Elastomerring (6) in der Montageposition angelegt ist und die unter einem spitzen Winkel (11) zu der Außenmantelfläche (8) des Deckenrohrs (2) orientiert ist.

4. Deckenbefestigungsvorrichtung nach Anspruch 2 oder 3, **dadurch gekennzeichnet, dass** die Aufnahmenut (9) so dimensioniert ist, dass sie den Elastomerring (6) vollständig oder zumindest zu einem überwiegenden Teil aufnimmt.

5. Deckenbefestigungsvorrichtung nach einem der Ansprüche 1 bis 4, **dadurch gekennzeichnet, dass** der Elastomerring (6) einen konstanten und bevorzugt einen runden Querschnitt aufweist.

6. Deckenbefestigungsvorrichtung nach einem der Ansprüche 1 bis 5, **dadurch gekennzeichnet, dass** die Verkleidung (3) dünnwandig schalenförmig ausgebildet ist.

7. Deckenbefestigungsvorrichtung nach einem der Ansprüche 2 bis 6, **dadurch gekennzeichnet, dass** ein an einem Grund (12) der Aufnahmenut (9) zwischen dem Deckenrohr (2) und dem Kragen (7) der Verkleidung (3) gebildeter Ringspalt (10) eine horizontal bestimmte mittlere Breite von weniger als 5 mm aufweist.

8. Deckenbefestigungsvorrichtung nach Anspruch 7, **dadurch gekennzeichnet, dass** eine horizontal bestimmte Querschnittbreite des Elastomerrings (6) größer ist als die mittlere Breite des Ringspalts (10).

9. Deckenbefestigungsvorrichtung nach einem der Ansprüche 1 bis 8, **dadurch gekennzeichnet, dass** ein O-Ring als Elastomerring (6) vorgesehen ist.

10. Deckenbefestigungsvorrichtung nach einem der Ansprüche 1 bis 9, **dadurch gekennzeichnet, dass** die Verkleidung (3) rotationssymmetrisch ausgebildet ist.

11. Installationsanordnung umfassend eine deckenmontierte Deckenbefestigungsvorrichtung nach einem der Ansprüche 1 bis 10.

12. Verwendung einer Deckenbefestigungsvorrichtung nach einem der Ansprüche 1 bis 10 zum deckenmontierten Befestigen von Medizingeräten.
